# EUROPÄISCHE PATENTSCHRIFT

(11) **EP 0 428 087 B1**
(45) Veröffentlichungstag und Bekanntmachung des Hinweises auf die Patenterteilung: **16.03.1994**
(21) Anmeldenummer: 90121566.5
(22) Anmeldetag: 11.11.1990
(51) Int. Cl.: A01B 17/00

(54) **Schollenplaniergerät**
Clod crusher
Brise-mottes

(30) Priorität: 14.11.1989 DE 3937820; 11.09.1990 DE 4028804
(43) Veröffentlichungstag der Anmeldung: 22.05.1991
(73) Patentinhaber: Kerner, Josef, D-89344 Aislingen (DE)
(72) Erfinder: Kerner, Josef, D-89344 Aislingen (DE)
(74) Vertreter: Gallo, Wolfgang, Dipl.-Ing. (FH)

(56) Entgegenhaltungen:
- DE-A- 2 825 334
- DE-A- 2 848 831
- DE-A- 3 125 379
- DE-C- 486 147
- DE-C- 3 246 998
- DE-U- 8 304 371
- US-A- 3 263 757
- US-A- 4 058 169

## Beschreibung

Die Erfindung betrifft ein Schollenplaniergerät als Zusatzausrüstung für Pflüge aller Bautypen, besonders Beet- und Volldrehpflüge. Mit diesem Gerät sollen die groben Schollen eingeebnet und zerkleinert werden.

Die am häufigsten angewendete Saatbeetbereitung ist das Pflügen mit anschließendem Zerkleinern der groben Schollen zu einem feinkrümeligen Saatbeet. Bis zur jüngsten Zeit war die Egge das dominierende Zerkleinergungs- und Einebnungsgerät der groben Schollen. Leider war im Herbst ein mehrmaliges Überfahren des Ackerbodens nötig, um eine saatfähige Bodenkrume zu erzielen. Dies hatte zur Folge, daß der gepflügte Boden durch die schweren Schlepper festgefahren und die gewünschte Bodenstruktur nicht erreicht wird. Selbst Spezialgeräte, wie die aus der Patentschrift DE 32 46 998 C2 bekannte Schmiegeegge konnten dies nicht verhindern. An der Schmiegeegge ist zum Einebnen eine sogenannte Glättschiene beweglich angebracht, die hinter einer Zugmaschine quer zur Zugrichtung gezogen wird und sich jedoch leicht den Bodenunebenheiten anpaßt. Seit einigen Jahren ist die Herbstsaatbeetbereitung durch rotierende Bodenbearbeitungsgeräte wie Rotoregge oder Kreiselegge zum Standard geworden, weil mit diesen Geräten der Boden mit einmaligem Überfahren "bedingt" saatfertig aufbereitet werden kann. Zusätzlich ist noch eine Kombination mit der Sähmaschine möglich, was einen weiteren Arbeitsgang einspart.

Bei dem Einsatz dieser rotierenden Bodenbearbeitungsgeräte hat sich gezeigt, daß eine vorher eingeebnete und gelockerte Ackerfurche die Arbeitsweise der Rotoren erleichtert. Zum Einebnen werden Pflugnachläufer und Schollenbrecher eingesetzt. Die Pflugnachläufer, die hinter dem Pflug hergezogen werden, erfüllen ihre Aufgabe gut, jedoch gibt es bei ihnen ungelöste Probleme des Transports vom Betrieb zum Feld und zurück. Auch das An- und Abkuppeln beim Wendemanöver ist problematisch, so daß der Einsatz dieser Geräte nur bei sehr großen Flächen sinnvoll ist.
Diese Nachteile sollten mit Pflugnachlaufgeräten, die am Pflug angebaut werden, auch Schollenbrecher genannt, beseitigt werden, Diese Pfluganbaugeräte lassen sich generell in zwei Gruppen einteilen. Eine Gruppe arbeitet mit rollenden Werkzeugen, wie zum Beispiel Scheiben, Sternrädern, usw., die zweite Gruppe gebraucht feste Werkzeuge, wie Zinken oder Flacheisen. Die Geräte mit rollenden Werkzeugen (wie zum Beispiel das der Patentschrift DE 31 25 379 A1) arbeiten weitgehend verstopfungsfrei und bei nicht zu nassem Boden ziemlich effektiv, bei durchnäßtem Boden wickeln sie jedoch auf. Die Effektivität solcher Konstruktionen ist jedoch nur durch den Zusatz von Gewichten möglich (Gewichtsbedarf für 1 m Arbeitsbreite ca. 200 - 300 kg), so daß ihr Einsatz am Pflug oft scheitert, und sie uns somit nur als Anhängegeräte bekannt sind. Die Geräte mit fest montierten Werkzeugen (wie zum Beispiel das der Patentschrift DE 28 48 831 A1) haben dieses Gewichtsproblem weniger, jedoch können sie nur für eine bestimmte Bodenart bzw. Bodenbeschaffenheit optimal eingestellt werden. Ändern sich die Bodenverhältnisse, so verstopfen die Geräte oder arbeiten ungenügend.

Zu den genannten Geräten mit festmontierten Werkzeugen gehört auch ein Schollenzerkleinerer als Pflugzusatzgerät, wie er aus der DE-C-486 147 bekannt ist. Dieses Gerät weist einen am Pflugrahmen montierten Tragrahmen mit mehreren horizontalen Rahmenstäben auf, an denen jeweils eine Anzahl von nach unten und schräg rückwärts abgekröpft verlaufenden messerartigen Werkzeugen befestigt sind. Ein anderes Gerät dieser Gattung ist aus der US-A-3 263 757 bekannt, das allerdings nur die Form einer am Pflugrahmen angehängten Egge mit drei Zinkenreihen hat.

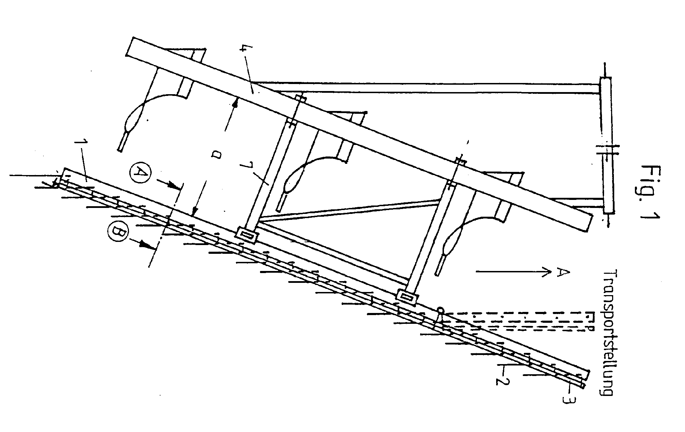

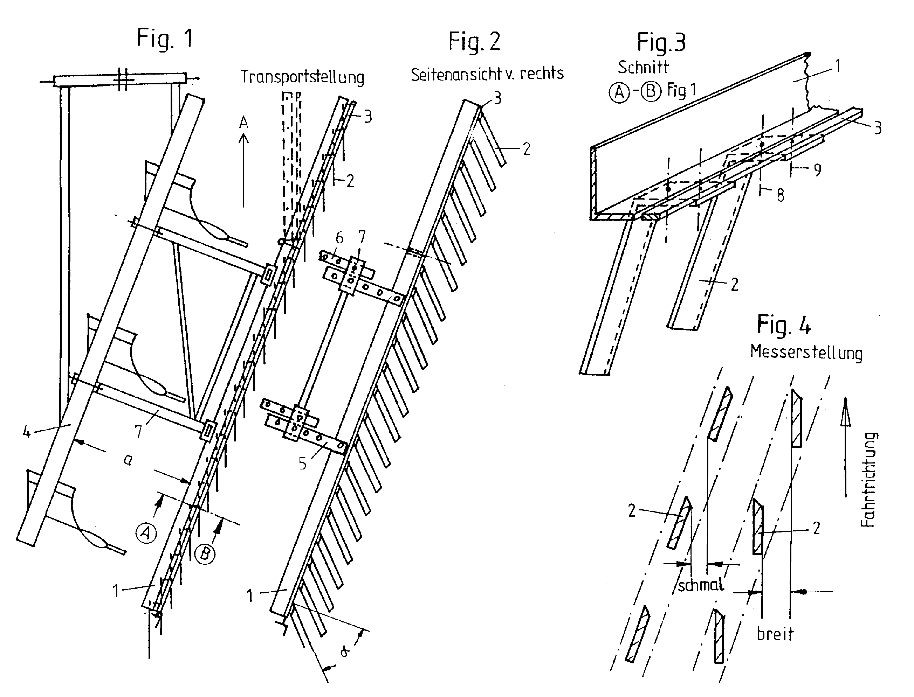

Der Erfinder hat sich zur Aufgabe gemacht, ein Schollenplaniergerät zu entwickeln, das einebnet, die Schollen zerkleinert, nicht durch ein Überwerfen der Schollen in seiner Effektivität geschwächt ist, leicht ist, störungsfrei arbeitet und gut handhabbar ist.
Diese Aufgabe wird gemäß der Erfindung durch das im Patentanspruch 1 definierte Schollenplaniergerät gelöst. Die Planierschiene dient dabei einmal als Träger für die Werkzeuge, die messerförmig ausgebildet sind, und zum anderen als Vorrichtung zum Einplanieren des gepflügten Bodens. Weil das Planiergerät direkt am schweren Pflugrahmen sitzt, ist kein hohes Eigengewicht des Gerätes nötig, um eine gleichmäßige Auflockerungstiefe zu erzielen. Die Werkzeuge zerkleinern den ausgebildet sind. Da die Planierschiene zum jeweiligen Pflugkörper einen bestimmten Abstand hat, so daß die Schollen an ihr aufprallen können, wird beispielsweise bei hoher Arbeitsgeschwindigkeit oder bei lockeren Böden ein Überwerfen der Schollen verhindert , d.h. die Schollen werden nur so weit abgelegt , wie erwünscht ist, und werden nicht überworfen. Das Gerät arbeitet störungsfrei, weil seine Werkzeuge schräg nach hinten verlaufen. Die Werkzeuge sind in Seitenansicht (Figur 2) auf das Gerät gesehen unter einem Winkel (α) schräg nach hinten angestellt, so daß ein Verstopfen verhindert wird, das Gerät leicht über den Boden gleitet und somit insgesamt völlig störungsfrei arbeitet.

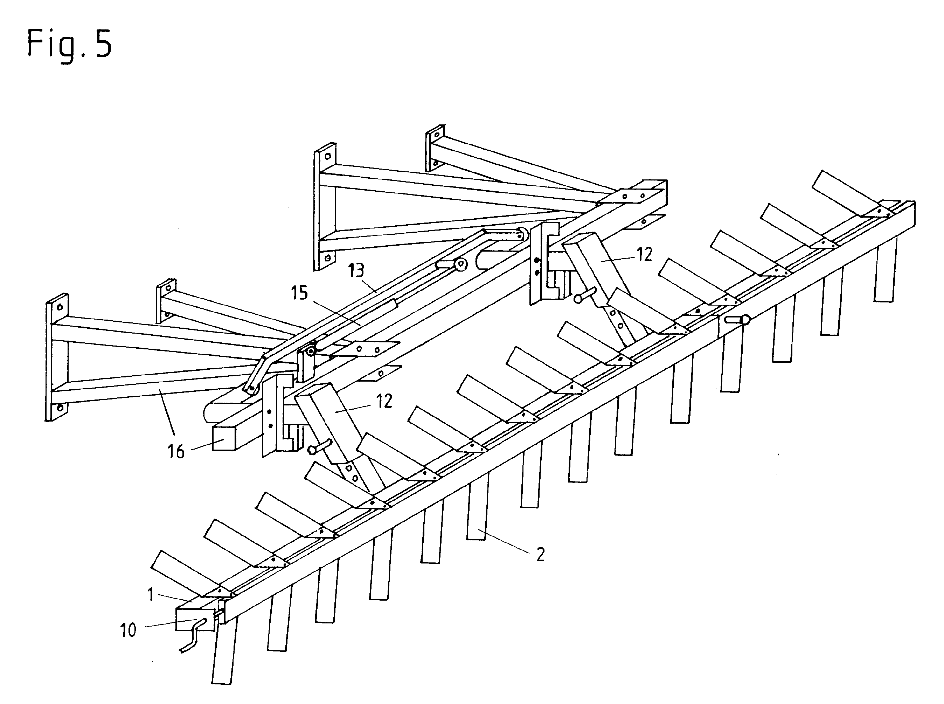

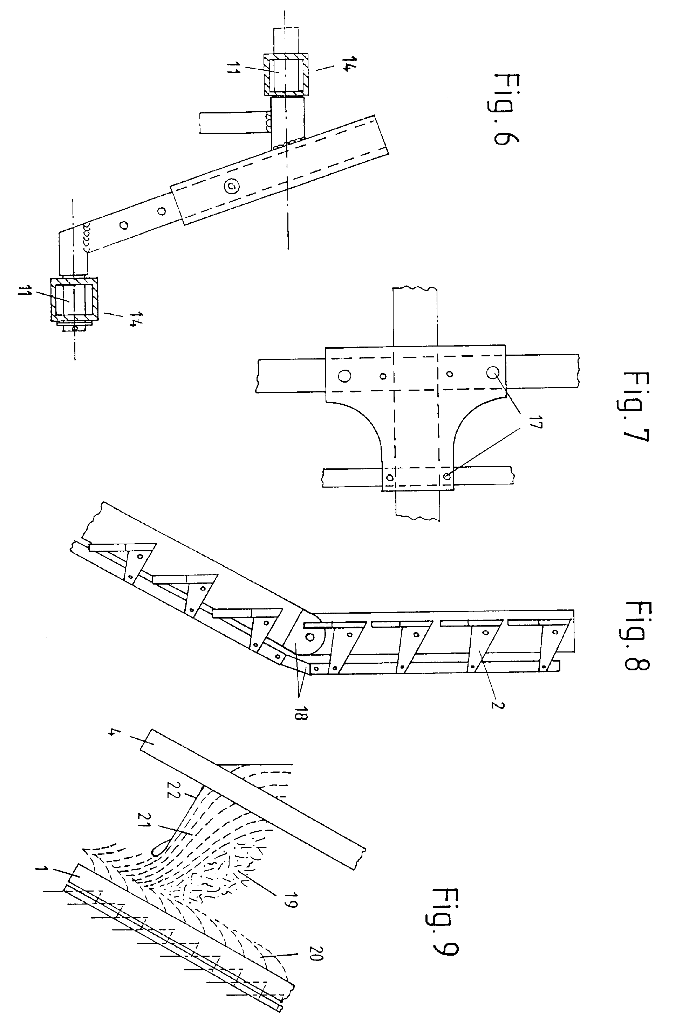

Besonders bevorzugte Ausführungsarten des Planiergeräts nach dem Anspruch 1 ergeben sich aus den Unteransprüchen.
Diese sehen insbesondere vor, daß die messerförmig ausgebildeten Werkzeuge schwenkbar an der Planierschiene befestigt und gemeinsam verstellbar sind. Diese Verstellung kann mit Hilfe einer Verstellschiene erfolgen, um bei Bedarf den Durchgang zwischen den Werkzeugen zu verändern. Die Verstellbarkeit der Werkzeuge und damit des Durchgangs gestattet es, das Gerät auf allen Böden, d.h. auf Mohr-, Lehm- oder Sandböden einzusetzen. Bodenverhältnis, Planiereigenschaft und Zerkleinerung können somit optimal abgestimmt werden, um ein Verstopfen zu verhindern, da je nach Bedarf der Durchgang zwischen den Werkzeugen schmal oder breit eingestellt werden kann (Figur 4).
Wenn der in Arbeitsrichtung (A) gesehen vordere Teil der Planierschiene eingeklappt wird, ist eine schnelles Verändern der Transportbreite und die Bearbeitung der Randfurche möglich. Um zu verhindern, daß sich beim Einklappen die Werkzeuge schrägstellen, ist das Gelenkteil so angebracht, daß die Werkzeuge immer in Fahrtrichtung stehen (Figur 7).
Als Alternative zu dem für Volldrehpflüge mit zwei Planierschienen ausgerüsteten Schollenplaniergerät entwickelte der Erfinder ein Gerät mit lediglich einer Planierschiene und Drehmechanismus. Bei diesem Gerät ist die Planierschiene auch an der Oberseite mit Werkzeugen bestückt, wobei der Werkzeugdurchgang sich mit einer Verstelleinrichtung für beide Werkzeugreihen gleichzeitig einstellen läßt, so daß keine Mehrarbeit beim Einstellen der Werkzeuge anfällt. Damit jedoch bei einem Drehen des Pflugs die Werkzeuge sich wieder auf der eingestellten Arbeitshöhe befinden, muß die Planierschiene abgesenkt werden. Dies geschieht durch die besondere Schwenkkonstruktion des Schollenplaniergeräts automatisch unmittelbar nach dem Drehen des Pflugs. Die Planierschiene, die in zwei Teleskoparmen beweglich gelagert ist, befindet sich nach dem Drehen des Pflugs im oberen Arbeitsbereich und steht parallel zum Pflugrahmen schräg nach vorne abwärts. Anschließend beginnt sich die Schiene durch ihr Eigengewicht langsam nach vorne zu bewegen und gelangt so in den unteren Arbeitsbereich. Dabei ermöglicht ein öldämpfer einen ruhigen Schwenkvorgang. Da beim Drehen des Pflugs die Einstellhöhe der Planierschiene in beiden Arbeitspositionen unverändert bleibt, ist sichergestellt, daß bei dem Schollenplaniergerät mit Drehmechanismus keine zusätzlichen Einstellungen zu tätigen sind. Ein weiterer Vorteil dieser Ausführung des Geräts besteht darin, daß es wesentlich leichter ist als die Ausführung mit zwei Planierschienen (Figur 4).
Da bei den meisten Pflügen mit mechanischer oder hydraulischer Schnittbreitenverstellung der Abstand zwischen Pflugschar und Pflugrahmen variiert, ist das Schollenplaniergerät an der Grindelaufhängung befestigt , so daß sich die Distanz zwischen Pflugkörper und Planierschiene nicht verändert (Figur 6).

Für spezielle Anwendungsbereiche oder extreme Bodenbedingungen kann die Planierschiene mit anderen Werkzeugvarianten als den messerförmigen Werkzeugen, wie z.B. mit Zinken, Profilstäben, Scheibenrädern etc. ausgerüstet werden.
Das Planiergerät hinterläßt eine Ackerfurche, die gleichmäßig eingeebnet und bei Bearbeitung mit Nachfolgegeräten wie Kreiselegge oder Rotoregge je nach Tiefeneinstellung des Planiergeräts bis zum Bearbeitungshorizont der Nachfolgegeräte gelockert ist. Bei einer Bodenbearbeitung dieser Art ist es besonders zweckmäßig, die Planierschiene höhenverstellbar am Pflugrahmen zu befestigen.
Weitere Vorteile des Geräts nach der Erfindung sind bei der Winterfurche die gute Befahrbarkeit im zeitigen Frühjahr zur Düngerausbringung und ein besseres Absetzen des Bodens über den Winter. Bei der Anwendung des Schollenplaniergeräts hat sich ein neues Verfahren ergeben, in dessen Verlauf sich bei der Einplanierung des Bodens ein Erdwall entlang der Planierschienes bildet. Dieser Erdwall verläuft spiegelbildlich zum Schollenstrom der Pflugkörper, wodurch Gründüngung oder auch Ernterückstände von zwei Seiten vollständig eingearbeitet werden, d.h. der Boden wird durch die von der Planierschiene erzeugte gegenläufige Bewegung beidseitig eingedreht (Figur 9).

Ein Ausführungsbeispiel der Erfindung ist in den Figuren 1 bis 9 dargestellt und wird im folgenden näher beschrieben. Es zeigen
- **Figur 1**: eine Draufsicht auf einen Beetpflug mit Befestigungsrahmen und seitlich angebrachter Planierschiene.
- **Figur 2**: eine Seitenansicht auf das Gerät von rechts für einen Volldrehpflug,
- **Figur 3**: eine Schnittzeichnug von Planierschiene, Verstellschiene und schwenk- und einstellbaren Werkzeugen,
- **Figur 4**: einen Schnitt durch die Werkzeuge mit breiter und schmaler Durchgangsstellung,
- **Figur 5**: eine perspektivische Abbildung des Schollenplaniergeräts mit Drehmechanismus,
- **Figur 6**: eine Seitenansicht eines Teleskoparmes,
- **Figur 7**: eine Darstellung der Grindelaufhängung mit Befestigungsmöglichkeit des Anbaubocks,
- **Figur 8**: eine Draufsicht auf den Einklappmechanismus der Planierschiene,
- **Figur 9**: eine schematische Darstellung der beidseitigen Eindrehung des Bodens.

Bei dem Beetpflug mit Planiergerät nach Figur 1 befindet sich seitlich von Pflugrahmen (4) die Planierschiene (1), die über einen Befestigungsrahmen (7) mit dem Pflug verbunden ist. Die Planierschiene (1) hat zum Pflugrahmen den Abstand (a), strichliert ist in der Figur die Transportstellung eingezeichnet.
Die Figur 2 zeigt die Planierschiene (1) in Seitenansicht mit den schräg nach hinten verlaufenden Werkzeugen. Die Anstellung der Werkzeuge erfolgt unter dem Winkel (α). Bei der gezeigten Ausführung des Geräts für einen Volldrehpflug mit zwei Planierschienen kann der Befestigungsrahmen (7) derselbe sein. Mit den Lochschienen (5) und (6) können die Planierschienen jeweils in der Höhe verstellt werden.
Bei der Ausführungsart nach Figur 3 sind die Werkzeuge um eine Schwenkachse (8) gegenüber der Planierschiene (1) schwenkbar. Weiter sind die Werkzeuge (2) in der Verstellachse (9) gegenüber der Verstellschiene (3) verstellbar, so daß sich alle Werkzeuge (2) gleichzeitig verstellen lassen.
Je nach den gegebenen Bodenverhältnissen kann bei der Ausführungsform nach Figur 4 der Durchgang zwischen den Werkzeugen (2) breit oder schmal eingestellt sein.
Die Planierschiene (1) kann zum Zweck des Transports und des Randpflügens eingeklappt werden. Wie Figur 8 zeigt, sind das Gelenkteil (18) der Planierschiene (1) und deren Drehpunkt so gewählt, daß dabei die Werkzeuge (2) immer in Fahrtrichtung stehen.
In den Figuren 5 und 6 ist das Schollenplaniergerät mit Drehmechanismus abgebildet. Bei dieser Ausführung ist die Planierschiene (1) auch an der Oberseite mit Werkzeugen (2) bestückt, wobei der Werkzeugdurchgang sich mit einer Verstelleinrichtung (10) für beide Werkzeugreihen gleichzeitig einstellen läßt. Die Planierschiene (1) ist mit zwei Bolzen (11) in den beiden Teleskoparmen (12) beweglich gelagert. Diese Teleskoparme (12) wiederum sind an dem Anbaubock (16) ebenfalls mit Bolzen beweglich gelagert und zusätzlich mit einem Drehstabilisator (13) verbunden. So kann die Planierschiene (1) samt Teleskoparmen (12) durchgeschwenkt werden. Wird der Pflug gedreht, so befindet sich die Planierschiene (1) im oberen Arbeitsbereich und steht parallel zum Pflugrahmen schräg nach vorne abwärts. Anschließend beginnt sich die Schiene durch ihr Eigengewicht langsam nach vorne zu bewegen und gelangt über ihre beiden Drehpunkte (14) in den unteren Arbeitsbereich. Das automatische Durchschwenken der Planierschiene (1) wird mit Hilfe eines Öldämpfers (15) abgebremst.
Figur 7 zeigt die Grindelaufhängung (17) des Pflugs, an der der Anbaubock des Schollenplaniergeräts befestigt werden kann. So verändert sich die Distanz zwischen Pflugkörper und Planierschiene bei der Benutzung von Pflügen mit mechanischer oder hydraulischer Schnittbreitenverstellung nicht.
Eine schematische Darstellung der beidseitigen Einarbeitung des Bodens ist in Figur 9 abgebildet. Hierbei ist das Verfahren ersichtlich, durch das die Gründüngung bzw. Ernterückstände (19) zum einen mit dem Erdwall (20) der Planierschiene (1) und zum anderen mit dem Schollenstrom (21) des Pflugkörpers (22) v-förmig eingearbeitet werden.

## Patentansprüche

1. Schollenplaniergerät als Pflugzusatzgerät, mit
einer Planierschiene (1),
einer Mehrzahl von an der Planierschiene (1) befestigten messerartigen Werkzeugen (2), die von der Planierschiene aus abwärts und, bezogen auf die Arbeitsrichtung schräg nach hinten verlaufen, und
einem mit der Planierschiene (1) verbundenen Befestigungsrahmen (7), der an einem Pflugrahmen befestigbar ist und zum Halten der Planierschiene mit seitlichem Abstand (d) vom Pflugrahmen dient.

2. Schollenplaniergerät nach Anspruch 1, dadurch gekennzeichnet, daß die Werkzeuge (2) jeweils um eine Achse (8) schwenkbar an der Planierschiene (1) angeordnet und mittels einer gemeinsamen Verstellschiene (3) gemeinsam verstellbar sind.

3. Schollenplaniergerät nach Anspruch 1, dadurch gekennzeichnet, daß die Planierschiene (1) höhenverstellbar (5,6) am Befestigungsrahmen (7) angeordnet ist.

4. Schollenplaniergerät nach Anspruch 2, dadurch gekennzeichnet, daß der in Arbeitsrichtung (A) gesehen vordere Teil der Planierschiene (1) einklappbar am übrigen Teil der Planierschiene angelenkt ist und daß die Anordnung so getroffen ist, daß die Werkzeuge (2) beim Einklappen in Fahrtrichtung gestellt werden.

5. Schollenplaniergerät nach einem der Ansprüche 1 bis 4, dadurch gekennzeichnet, daß die Planierschiene (1) sowohl an der Unterseite wie auch an der Oberseite mit jeweils einer Reihe von Werkzeugen (2) bestückt ist.

6. Schollenplaniergerät nach Anspruch 5, dadurch gekennzeichnet, daß die Planierschiene am Befestigungsrahmen (7) über Teleskoparme (12) angeordnet ist, die sowohl mit der Planierschiene wie auch mit dem Befestigungsrahmen jeweils um horizontale Achsen drehbar angelenkt sind, und daß die Teleskoparme (12) außerdem mit einem mit einem Öldämpfer (15) versehenen Drehstabilisator (13) gekuppelt sind.

## Claims

1. A clod levelling apparatus for use as a plough accessory unit, comprising
a levelling bar (1),
a plurality of plate-like tools (2) attached to said levelling bar (1), said tools extending downward from said levelling bar and inclined backward with respect to the working direction, and
a mounting frame (7) connected to said levelling bar (1), said mounting frame being attachable to the frame of a plough and acting to support said levelling bar with lateral distance (d) from said plough frame.

2. The clod levelling apparatus of claim 1, characterised in that said tools (2) are mounted to said levelling bar (1) such that they are each rotatable about an axis (8) and that they are adjustable in common by means of a common adjustment bar (3).

3. The clod levelling apparatus of claim 1, characterised in that said levelling bar (1) is mounted to said mounting frame (7) in a vertically adjustable manner.

4. The clod levelling apparatus of claim 2, characterised in that the front end portion of said levelling bar (1), when seen in the working direction (A), is pivoted to the remaining portion of the levelling bar so as to be foldable inward, the arrangement being such that said folding causes said tools (2) to be adjusted to the working direction.

5. The clod levelling apparatus of any of claims 1 to 4, characterised in that said levelling bar (1) carries a row of tools (2) at its lower side and at its upper side as well.

6. The clod levelling apparatus of claim 5, characterised in that said levelling bar is mounted to said mounting frame (7) through telescopic arms (12), said telescopic arms being pivotally connected to both said levelling bar and said mounting frame so as to be rotatable about horizontal axes, and said telescopic arms (12) being also coupled to a torsion stabilizer (13) having an oil damper (15).

## Revendications

1. Brise-mottes, en tant qu'instrument additionnel d'une charrue, comportant
une traverse support (1),
une pluralité d'outils (2) en forme de couteaux qui sont fixés sur la traverse support (1) et, à partir de celle-ci, s'étendent vers le bas et en biais vers l'arrière par rapport à la direction de travail et
un châssis de fixation (7) qui est lié à la traverse support (1), peut être fixé sur un châssis de charrue et est destiné à tenir la traverse support à distance (a) latérale dudit châssis de charrue.

2. Brise-mottes selon la revendication 1, caractérisé par le fait que les outils (2) sont montés sur la traverse support (1) avec possibilité de pivotement chacun autour d'un axe (8) et peuvent être réglés simultanément au moyen d'une barre de réglage (3) commune.

3. Brise-mottes selon la revendication 1, caractérisé par le fait que la traverse support (1) est montée avec possibilité de réglage en hauteur (5, 6) sur le châssis de fixation (7).

4. Brise-mottes selon la revendication 2, caractérisé par le fait que la partie antérieure de la traverse support (1), vu dans la direction de travail (A) est articulée sur le reste de la traverse support de manière à pouvoir être repliée et par le fait que l'agencement est tel que lors du repli, les outils (2) sont amenés dans la direction de déplacement.

5. Brise-mottes selon l'une des revendication 1 à 4, caractérisé par le fait que la traverse support (1) comporte une rangée d'outils (2) respectivement sur sa face inférieure et sur sa face supérieure.

6. Brise-mottes selon la revendication 5, caractérisé par le fait que la traverse support est montée sur le châssis de fixation (7) par l'intermédiaire de bras télescopiques (12) qui sont montés avec possibilité de rotation autour d'axes horizontaux sur la traverse support et sur le châssis de fixation et par le fait que les bras télescopiques (12) sont en outre couplés à un dispositif de stabilisation en rotation (13) pourvu d'un amortisseur hydraulique (15).
